# EUROPEAN PATENT SPECIFICATION

(11) **EP 0 550 935 B1**
(45) Date of publication and mention of the grant of the patent: **05.04.1995**
(21) Application number: 92204096.9
(22) Date of filing: 24.12.1992
(51) Int. Cl.: F15B 19/00, G01M 19/00

(54) **Test device for simultaneously testing at least two hydraulic systems**
Rückungseinrichtung zum gleichseitigen Prüfen von mindestens zwei Hydrauliksystemen
Dispositif d'essai pour essayer simultanément au moins deux systèmes hydrauliques

(30) Priority: 07.01.1992 NL 9200012
(43) Date of publication of application: 14.07.1993
(73) Proprietor: Sun Electric Systems B.V., NL-1382 LG Weesp (NL)
(72) Inventor: Lammers, Jan Willem, NL-1381 CD Weesp (NL)
(74) Representative: Timmers, Cornelis Herman Johannes

(56) References cited:
- EP-A- 0 238 368
- FR-A- 2 102 488
- FR-A- 2 584 780
- NL-A- 7 707 241
- NL-A- 7 707 711

## Description

The invention relates to a test device for simultaneously testing at least two interacting hydraulic systems, each of which systems contains a positive-displacement pump whose low-pressure side is connected to a hydraulic-medium reservoir, the space above said medium being connected to the atmosphere or to another gaseous medium, and the high-pressure side of which pump is connected to the high-pressure side of a load whose low-pressure side is connected to the low-pressure side of the positive-displacement pump, and which test device is provided with its own positive-displacement pump whose low-pressure side is connected via individual regulators to the respective low-pressure sides of the systems to be tested and the high-pressure side is connected to the respective high-pressure sides of the systems to be tested, means being provided for observing the respective filling levels of the respective reservoirs and actuating, in response thereto, the regulators in order to avoid overflow or emptying of the reservoirs.

Such a test device has been marketed by the Applicant in an embodiment in which a buffer reservoir is incorporated between the outputs of the respective regulators connected to the low-pressure sides and the low-pressure side of the positive-displacement pump of the device, and the means for observing the respective filling levels operate over a small range in such a way that the respective filling levels of the reservoirs are always adjusted to a fixed value. Since October 1990, such a device has been part of the prior art. A modification of said device designed to test a single hydraulic circuit has also been developed earlier by the Applicant and is also part of the prior art.

In practice it is found that, to test hydraulic systems, there is a need for a test device which is constructed without a buffer reservoir, for example for application in maritime environments, this being to ensure that the hydraulic medium comes into contact as little as possible with, for example, the salty outside air. If, at the same time, the adjustment of the filling level to a fixed point as known from the prior art is used, problems arise which are due to the unavoidable imbalances between the plurality of systems which are always working at the same time. If, as is in fact unavoidable, more resistance is encountered in one system than in the other, pressure differences will be encountered on the low-pressure sides and these may result in appreciable filling-level differences in the respective reservoirs. In particular, if the filling level is increased as a result of thermal expansion, the consequence may be that, before a rise in one reservoir is compensated for by the actuation of the associated regulator, said reservoir has already overflowed or has been completely emptied, respectively, with the consequence that unwanted air penetrates the system.

The object of the invention is to overcome this drawback. According to the invention, this is achieved in that
- the means for observing the respective filling levels are each designed to deliver signals representing the instantaneous filling level over the effective range of the filling levels which may occur;
- a comparator is present to which said signals can be fed to determine at least the highest filling level;
- in response to said determination, the regulator connected to the reservoir having the highest filling level is controlled in such a way that its passage size is increased.

According to the invention, the adjustment of the filling level to a fixed level as known from the prior art is replaced by a regulation which responds solely to a filling-level difference, which is much faster and more effective, and, in addition, it is possible to define a maximum or minimum filling level during the regulating process. This overcomes the drawbacks outlined above.

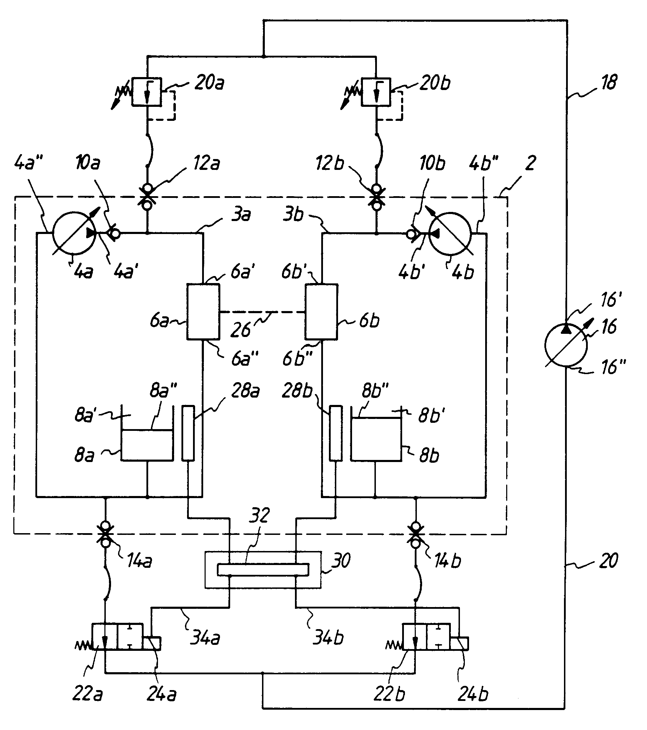

The invention is explained by reference to the drawing which diagrammatically shows an embodiment of the invention.

In the drawing, the elements situated inside the frame indicated by the broken line 2 are those which belong to a hydraulic system to be tested, for example the hydraulic system of an aircraft. In such systems, all the components are constructed in duplicate for reasons of safety. There are therefore two hydraulic positive-displacement pumps 4a, 4b, two parallel-working loads 6a, 6b to be driven (for example, for actuating a control device such as a flap or part of the undercarriage) and two feed reservoirs for the hydraulic medium, indicated by 8a and 8b, respectively. The respective high-pressure sides 4a', 4b' are connected via nonreturn valves 10a, 10b to the high-pressure sides 6a', 6b', of the respective loads 6a and 6b, the respective low-pressure sides 4a'', 4b'' of the positive-displacement pumps 4a and 4b, respectively, being connected, on the one hand to the reservoirs 8a, 8b and, on the other hand, to the low-pressure sides 6a'' and 6b'', respectively, of the loads 6a and 6b, respectively. The spaces 8a' and 8b', respectively, above the hydraulic medium are connected to the outside air.

The high-pressure sides 4a' and 4b', respectively of the two systems 3a, 3b are connected to the conventional test couplings 12a and 12b, respectively, and the low-pressure sides 4a'', 4b'' are connected to the couplings 14a, 14b.

Via said couplings 12a, 12b and 14a, 14b, respectively, there can be connected to the two systems a test device which is constructed using a positive-displacement pump 16 which operates independently of the systems and whose high-pressure side 16a can be connected via the pipe 18 and the two pressure-reducing valves 20a, 20b to the couplings 12a, 12b, it being possible to connect the low-pressure side 16'' via the pipe 20 and two regulating valves 22b, 22b, which can be actuated independently of one another, to the couplings 14a, 14b. The regulating valve 22a has a control device 24a which is indicated diagrammatically and the regulating valve 22b has a control device 24b, which is also indicated diagrammatically.

The systems 3a, 3b are tested by providing the two systems with hydraulic pressure medium externally via the positive-displacement pump 6 with the positive-displacement pumps 4a, 4b at rest and checking the operation of the loads 6a, 6b under these circumstances.

Although the loads 6a, 6b may be mutually coupled and in that case therefore move together (which is symbolized by the broken line 26), as a result of differences of resistance in the respective hydraulic circuits it is unavoidable that pressure differences occur between the low-pressure sides of the reservoirs 8a, 8b, which results in different fluid levels in said reservoirs. This level is indicated for the reservoir 8a by 8a'' and for the reservoir 8b by 8b''; the level 8b'' is the highest. During the operation of the two systems, the hydraulic medium will be heated, as a result of which the fluid levels 8a'' and 8b'', respectively, increase; if, in addition, an unbalanced system load now occurs, a situation may arise in which the fluid level in one reservoir (for example 8a) drops to such an extent and the fluid level in the other reservoir (that is to say 8b) rises to such an extent that this latter reservoir overflows and the other is completely emptied in the meantime. With a regulation such as is used in accordance with the prior art and as described above, it is necessary for the test system to be provided with a feed container; if that is not the case, it is not possible to keep the fluid levels in the two reservoirs 8a, 8b at a fixed level as a result of volume changes in the system due to variations in, for example, temperature and/or pressure. Here, therefore, this does not provide a solution.

According to the invention, the following regulation is used:
Combined with each container 8a and 8b is a suitable detector 28a and 28b, respectively, which delivers an output signal representing the instantaneous fluid level 8a'' and 8b'', respectively. The two output signals are fed to an electronic computing and processing unit 30 containing a comparator 32 which determines which of the two output signals originating from the detector 28a and 28b, respectively, represents the highest fluid level. Depending thereon, control signals are sent via the control lines 34a, 34b to the control units 24a and 24b, respectively, of the control flaps 22a and 22b, respectively, in particular in such a way that, if the fluid level 8b'' of the reservoir 8b is higher than that of the reservoir 8a, the regulating valve 22b associated with the reservoir 8b is in any case opened, while the regulating valve 22a associated with the fluid reservoir 8a having the lowest fluid level may possibly be closed. Such a regulation operates particularly rapidly and operationally safely and it has been found that this measure proposed in accordance with the invention reliably prevents overflow or emptying of one of the reservoirs. In addition, the filling level is limited to a minimum or maximum value.

Of course, the invention can also be used in systems having more than two circuits, for example three; in that case, a comparison is made between three signals representing the reservoir filling levels and the associated regulating valves are controlled in the manner described above: the associated regulating valve of that reservoir whose fluid level is the highest is opened and the regulating valve of the reservoir whose fluid level is lowest is closed.

## Claims

1. Test device for simultaneously testing at least two hydraulic systems, each of which systems contains a positive-displacement pump (4a, 4b) whose low-pressure side is connected to a hydraulic-medium reservoir (8a, 8b), the space above said medium being connected to the atmosphere or another gaseous medium, and the high-pressure side of which pump is connected to the high-pressure side of a load (6a, 6b) whose low-pressure side is connected to the low-pressure side of the positive-displacement pump, and which test device is provided with its own positive-displacement pump (16) whose low-pressure side is connected via individual regulators (22a, 22b) to the respective low-pressure sides of the systems to be tested and whose high-pressure side is connected to the respective high-pressure sides of the systems to be tested, means (28a, 28b) being provided for observing the respective filling levels of the respective reservoirs (8a, 8b) and actuating, in response thereto, the regulators in order to avoid overflow or emptying of the reservoirs, characterised by :
- the means (28a, 28b) for observing the respective filling levels deliver signals representing the instantaneous filling levels over the effective range of the filling levels which may occur;
- a comparator (32) to which said signals are fed to determine at least the highest filling level;
- means for responding to said determination so that the regulator (22a, 22b) connected to the reservoir having the highest filling level is controlled in such a way that its passage size is increased.

2. Test device according to Claim 1, characterised in that the comparator (32) is also provided with means for determining the lowest filling level so that, in response thereto, the regulator connected to the reservoir (8a, 8b) having the lowest filling level is controlled in such a way that its passage size is decreased.

## Patentansprüche

1. Testvorrichtung zum gleichzeitigen Testen mindestens zweier hydraulischer Systeme, von denen jedes eine Verdrängerpumpe (4a, 4b) enthält, deren Niederdruckseite mit einem Hydraulikmedium-Reservoir (8a, 8b) verbunden ist, wobei der Raum oberhalb des Mediums mit der Atmosphäre oder einem anderen gasförmigen Medium verbunden ist, während die Hochdruckseite der Pumpe mit der Hochdruckseite einer Last (6a, 6b) verbunden ist, deren Niederdruckseite mit der Niederdruckseite der Verdrängerpumpe verbunden ist, und wobei die Testvorrichtung mit ihrer eigenen Verdrängerpumpe (16) versehen ist, deren Niederdruckseite über individuelle Regulatoren (22a, 22b) mit den jeweiligen Niederdruckseiten der zu testenden Systeme verbunden ist und deren Hochdruckseite mit den jeweiligen Hochdruckseiten der zu testenden Systeme verbunden ist, wobei Mittel (28a, 28b) vorgesehen sind zum Beobachten der jeweiligen Füllstände der jeweiligen Reservoire (8a, 8b) und, reagierend darauf, zum Betätigen der Regulatoren, um ein Überfließen oder Entleeren der Reservoire zum vermeiden,
**gekennzeichnet durch**
- das Merkmal, daß die Mittel (28a, 28b) zum Beobachten der jeweiligen Füllstände Signale liefern, die die augenblicklichen Füllstände über dem effektiven Bereich der Füllstände, die auftreten können, repräsentieren,
- einen Komparator (32), dem die Signale zugeführt werden, um mindestens den höchsten Füllstand zu bestimmen,
- Mittel zum Ansprechen auf besagte Bestimmung, so daß derjenige Regulator (22a, 22b), der mit dem Reservoir mit dem höchsten Füllstand verbunden ist, derart gesteuert wird, daß sein Durchlaß vergrößert wird.

2. Testvorrichtung nach Anspruch 1, dadurch gekennzeichnet, daß der Komparator (32) ferner mit Mitteln zum Bestimmen des niedrigsten Füllstandes versehen ist, so daß, reagierend darauf, derjenige Regulator, der mit dem Reservoir (8a, 8b) mit dem niedrigsten Füllstand verbunden ist, derart gesteuert wird, daß sein Durchlaß verkleinert wird.

## Revendications

1. Dispositif d'essai pour essayer simultanément au moins deux systèmes hydrauliques, dont chacun de ces systèmes comprend une pompe volumétrique (4a, 4b) dont le côté basse pression est relié à un réservoir (8a, 8b) de fluide hydraulique, l'espace au-dessus dudit liquide étant relié à l'atmosphère ou à un autre fluide gazeux, et le côté haute pression de ladite pompe est relié au côté haute pression d'une charge (6a, 6b) dont le côté basse pression est relié au côté basse pression de la pompe volumétrique, et ledit dispositif d'essai comprend sa propre pompe volumétrique (16) dont le côté basse pression est relié, par des régulateurs individuels (22a, 22b), aux côtés respectifs basse pression des systèmes à essayer, et dont le côté haute pression est relié aux côtés haute pression respectifs des systèmes à essayer, des moyens (28a, 28b) étant prévus pour observer les niveaux de remplissage respectifs des réservoirs respectifs (8a, 8b) et pour actionner, en réponse, les régulateurs de façon à éviter le débordement ou le vidage des réservoirs, caractérisé en ce que
- les moyens (28a, 28b) pour observer les niveaux de remplissage respectifs fournissent des signaux représentant les niveaux de remplissage instantanés dans la gamme effective des niveaux de remplissage que l'on peut rencontrer;
- un comparateur (32) auquel sont fournis lesdits signaux pour déterminer au moins le niveau de remplissage le plus élevé;
- des moyens pour répondre à ladite détermination de manière que le régulateur (22a, 22b) relié au réservoir ayant le niveau de remplissage le plus élevé soit commandé de telle façon que sa section de passage soit augmentée.

2. Dispositif d'essai selon la revendication 1, caractérisé en ce que le comparateur (32) est pourvu également des moyens pour déterminer le niveau de remplissage le plus bas de manière que, en réponse, le régulateur relié au réservoir (8a, 8b) ayant le niveau de remplissage le plus bas soit commandé de telle façon que sa section de passage soit diminuée.
